# EUROPÄISCHE PATENTSCHRIFT

(11) **EP 1 663 567 B1**
(45) Veröffentlichungstag und Bekanntmachung des Hinweises auf die Patenterteilung: **14.11.2007**
(21) Anmeldenummer: 04786999.5
(22) Anmeldetag: 24.09.2004
(51) Int. Cl.: B23K 26/36, B23K 26/00, B41C 1/05, B44C 1/22, G05B 19/4099, B23K 26/08

(54) **VERFAHREN UND VORRICHTUNG ZUR MEHRSCHICHTIGEN MATERIALABTRAGUNG EINER DREIDIMENSIONALEN OBERFLÄCHE MITTELS LASER DURCH VERWENDUNG EINES DURCH EINE MATHEMATISCHE FUNKTION BESCHRIEBENEN POLYGONNETZES, DAS DIE OBERFLÄCHE DARSTELLT**
METHOD AND DEVICE FOR REMOVING MATERIAL FROM A THREE-DIMENSIONAL SURFACE IN A MULTI-LAYERED MANNER BY MEANS OF A LASER, USING A POLYGON NETWORK WHICH IS DESCRIBED BY A MATHEMATICAL FUNCTION AND REPRESENTS THE SURFACE
PROCEDE ET DISPOSITIF D'ENLEVEMENT DE MATIERE MULTICOUCHE D'UNE SURFACE TRIDIMENSIONNELLE PAR LASER A L'AIDE D'UN RESEAU DE POLYGONES QUI EST DECRIT PAR UNE FONCTION MATHEMATIQUE ET REPRESENTE LA SURFACE

(30) Priorität: 26.09.2003 DE 10345080
(43) Veröffentlichungstag der Anmeldung: 07.06.2006
(73) Patentinhaber: PEGUFORM GMBH, 79268 Bötzingen (DE)
(72) Erfinder: HESS, Raul, 79183 Waldkirch (DE)
(74) Vertreter: Neunert, Peter Andreas
(86) Internationale Anmeldenummer: PCT/EP2004/010715
(87) Internationale Veröffentlichungsnummer: WO 2005/030430

(56) Entgegenhaltungen:
- DE-A1- 4 441 337
- DE-A1- 10 032 981
- DE-A1- 10 116 672
- US-B1- 6 300 595

## Beschreibung

Die Erfindung betrifft ein Verfahren und eine Vorrichtung zur Abtragung von Material nach einer vorgegebenen Vorschrift, beispielsweise einem sogenannten Urmodell (siehe Ansprüche 1 und 22). Der Materialabtrag erfolgt von einer beliebig gestalteten, insbesondere nichtebenen oder rotationssymmetrischen dreidimensionalen Oberfläche, wobei die Tiefe des Materialabtrags an jedem Ort der Oberfläche unterschiedlich sein kann.

Verfahren zur Herstellung einer Oberflächenstruktur auf einer beliebig geformten dreidimensionalen Oberfläche erfordern bei Erreichung einer Präzision im Mikrometerbereich zeitintensive und aufwändige Arbeitsschritte. Die Herstellung einer Oberflächenstruktur erfolgte bisher mittels Ätzverfahren in Form von schichtweisem Abtrag einer Materialschicht von einer Oberfläche oder galvanischen Verfahren, bei welchen eine Positivform mit der gewünschten Oberflächenstruktur mit einem Metall überzogen worden ist, welches dann eine Negativform zur Herstellung des gewünschten Formteils oder der Folie ergibt. Diese Verfahrensvarianten erfordern immer eine große Anzahl von Verfahrensschritten, um eine Negativform für nur eine einzige Oberflächenstruktur zu erhalten. Dies hat auch zur Folge, dass bei jeder Änderung der Oberflächenstruktur dieselben Verfahrensschritte erneut anfallen.

Bislang sind vor allem zwei Verfahren verbreitet, um Werkzeuge wirtschaftlich zu narben, zum einen handelt es sich um die Ätznarbe, wobei die Oberfläche des Körpers beliebiger Topologie unterschiedlich maskiert wird und dann durch eine Ätzflüssigkeit selektiv abgetragen wird. Dieses Verfahren kann mit Einschränkungen auch schichtweise angewendet werden und erzeugt dann allerdings einen abgestuften Übergang zwischen Narbgipfeln und Narbtälern. Außerdem gibt es Schwierigkeiten bei komplizierten Geometrien der zu narbenden Oberfläche.

Ein anderes Verfahren ist das sogenannte Galvano-Verfahren. Hierbei wird ein Positivmodell, das sogenannte Belederungsmodell, mit einer Folie (oder Leder) bezogen, welche die gewünschte Narbe aufweist. In einem Abformverfahren wird dann die (Leder)narbe in ein Negativwerkzeug übernommen, das wiederum zur Herstellung eines (Positiv-) Badmodells verwendet wird. Auf dieses wird dann in einem Bad galvanisch eine Metallschicht aufgebracht. Das so erhaltene Galvanowerkzeug muss dann noch verstärkt werden, kann dann aber auch nur für bestimmte Verfahren zur Teileherstellung zur Anwendung kommen, die seine Oberfläche nicht zu stark beanspruchen. Verbreitet sind vor allem das Slush-Verfahren und das Sprühhaut-Verfahren, wobei aber beide letztgenannten Verfahren sehr zeit- und kostenaufwendig sind. Als Alternative bietet sich eine Abtragung der Oberfläche mittels Laser an. Die Technologie der Abtragung von Material mittels Laser ist aus DE3939866 A1 aus dem Bereich der Lasergravur bekannt. Von Bedeutung ist meist die detailgetreue Abbildung eines Objekts, welches im wesentlichen eine zweidimensionale, also ebene Oberfläche aufweist. Somit erfolgt der Materialabtrag entlang einer im wesentlichen konstanten Tiefe. Eine Abbildung von dreidimensionalen Oberflächenstrukturen ist nicht Gegenstand eines derartigen Verfahrens, womit das Problem einer Abtragung von Material zur Erzeugung einer dreidimensionalen Struktur sich nicht stellt.

Die Materialabtragung durch Verdampfen einer Oberflächenschicht mittels Laser ist aus DE4209933 C2 bekannt. Der Laserstrahl wird aufgeweitet und durch drehbare Ablenkspiegel über eine von einem Rechner vorgegebene Bezugslinie geführt. Die Bezugslinien bilden ein Rasterfeld. Das Rasterfeld wird mehrmals vom Laserstrahl entlang winkelversetzter Bezugslinien abgefahren, wobei Material durch Verdampfung abgetragen wird. Durch die Variation der Richtung der Laserspuren durch Drehung in der Bearbeitungsebene um einen bestimmten Winkel werden systematische Überhöhungen in der Grenzschicht vermieden. Dadurch entsteht eine netzartige Struktur der Rasterlinien. Diese Technologie findet ebenfalls ausschließlich auf zweidimensionalen Oberflächen konstanter Tiefe Anwendung. Mit der in der Patentschrift offenbarten Technologie wird ein gleichmäßiger Abtrag von Material im Rasterfeld erreicht.

Eine zeilenweise Führung des Lasers in Bahnen (Rasterlinien), bzw. Spuren, im jeweiligen Bearbeitungsfeld des Lasers wird in DE10032981 A1 offenbart. Die Spuren werden bereichsweise auf ein sich bewegendes Körper beliebiger Topologie aufgebracht. Um zu vermeiden, dass sich im Überlappungsbereich der Spuren an den Bereichsgrenzen eine scharfe Trennlinie ausbildet, die durch übermäßigen Materialabtrag im Überlappungsbereich entsteht, werden die Bereichsgrenzen bei jedem Abtrag versetzt. Mit anderen Worten, bei zeilenförmigem Abtrag eines Bereichs setzt der Laser am Rand nicht längs einer Linie ab, sondern fährt in die Nähe dieser Linie. Der Endpunkt der Abtragung liegt dann zwar in einem Abstandsbereich dieser Linie, dieser Abstandsbereich ist aber von Zeile zu Zeile verschieden. Da die Endpunkte sich somit statistisch um den Mittelwert der Linie verteilen, kann kein optischer Defekt wahrgenommen werden. Dieses Verfahren eignet sich zum Abtrag von Rasterfeldern, welche auf einer Ebene liegen. Sobald die Rasterfelder aber eine Neigung gegeneinander aufweisen, wird durch das Abtragmittel eine andere Materialmenge abgetragen, wenn sich das Abtragmittel aus dem Rasterfeld entfernt. Somit müsste jeder einzelne Endpunkt aufgezeichnet werden, der Materialabtrag bestimmt, und der für das benachbarte Rasterfeld vorgesehene Materialabtrag um den Fehlbetrag korrigiert werden. Aus diesem Grund ist das Verfahren für dreidimensionale Oberflächen nur unter hohem zusätzlichen Rechenaufwand anwendbar.

Die schichtweise Materialabtragung zur Erzeugung dreidimensionaler Strukturen wird in den beiden Patentschriften US6300595 B1 und US6407361 B1 offenbart. Dabei werden Linien auf einer mittels eines EDV-Programms generierten dreidimensionalen Grafik in Bahnen für die Abtragung mittels Laser umgerechnet. Diese Bahnen liegen auf ebenen Schichten. Die Materialabtragung erfolgt entlang dieser Bahnen auf jeder dieser ebenen Schichten. Die Länge der Bahnen wird aus der dreidimensionalen Grafik rechnerisch abgeleitet. Vorteilhafterweise besteht die Grafik aus einfach zu modellierenden Objekten, wie Halbkreisen oder Pyramiden. Es wird zwar die Möglichkeit erörtert, mehrere derartige, geometrisch einfach beschreibbare Grafiken zu einem komplexen Kunstwerk zusammenzusetzen, allerdings muss jede dieser Grafiken sequentiell abgetragen werden. Im Übergangsbereich aller Bearbeitungsfelder wird bei jedem Bearbeitungsvorgang einer Schicht das Problem auftreten, dass entweder Grate oder Löcher in der Form entstehen. Bei Grafiken, welche eine rotationssymmetrische Ausnehmung in einer ebenen Oberfläche erzeugen, tritt dieses Problem nicht auf, welches die Verwendung des in den beiden Patentschriften offenbarten Verfahrens bei komplexen Oberflächenstrukturen nicht erlaubt.

Nach der Lehre der DE10116672 A1 werden Grob- und Feinstrukturen unterschiedlich bearbeitet, wobei Feinbereiche mittels Laser und Grobbereiche mittels einer Abtragvorrichtung bearbeitet werden. Diese Technologie eignet sich insbesondere für Bearbeitung von Metalloberflächen, welche beispielsweise auf Druckzylindern angeordnet sind. Die Grobbearbeitung erfolgt mittels mechanischer Abtragvorrichtungen.

Bekanntermaßen lassen sich beispielsweise durch die Materialabtragung mittels Laser auch komplizierte Strukturen herstellen, dies wird beispielsweise bei der Mikrobearbeitung von Materialien ausgenutzt. Es gibt auch bereits Verfahren, um großflächig Material mit dem Laser abzutragen. Allerdings ist es bisher nicht gelungen, mit diesen vorbekannten Laserverfahren beliebige gekrümmte Oberflächen mit einer beliebigen Textur zu versehen, wobei die Genauigkeit des Abtrags im Bereich von einigen µm liegen soll. Der Grund liegt darin, wie unter der Bewertung des Standes der Technik früher erwähnt wurde, dass die Polygone des Polygonnetzes nicht in einer Ebene liegen. Der Bearbeitungsbereich des Abtragmittels liegt allerdings in einer Ebene, was bedeutet, dass sich die Tiefe des Abtrags verändert, sobald das Abtragmittel die Ebene verlässt.
US-B1-6 300 595, der als nächtsliegenden Stand der Tecknik angesehen wird, offenbart ein Verfahren zur Erzeugung einer Textur auf einer Oberfläche durch Abtragung von Material in Schichten mittels eines Lasers, wobei Ausschnitte der Textur durch eine Anzahl von Bildpunkten denen eine Graustufe zugeordnet ist, beschrieben werden und die Textur über eine Anzahl von Bildpunkten eine Verteilung von Graustufen aufweist, wobei jeder Graustufe ein Abstandswert zugeordnet ist, der dem Abstand der Oberfläche in diesem Bildpunkt zur Texturoberfläche entspricht.
Diese Anmelgung offenbart auch eine Vorrichtung zur schichtweisen Abtragung von Material aus einer Oberfläche zur Erzeugung einer dreidimensionalen Struktur mit einem punktförmig auf die Oberfläche wirkenden Laser, wobei das Abtragmittel gemäß den in einem Rasterbild gespeicherten Informationen einen Materialabtrag vornimmt, sowie einem Rechner, durch den das Abtragmittel angesteuert wird.

Es ist Aufgabe der Erfindung, eine Oberflächenstruktur, wie beispielsweise eine Narbe, von Körpern beliebiger Topologie, also beliebig gestalteten dreidimensionalen Oberflächen abzutragen. Die Erfindung ist mit der Gegenständen der Ansprüche 1 und 22 definiert. Diese Oberfläche ist durch eine mathematische Funktion zumindest näherungsweise beschrieben *und wird auch Urmodell genannt, welches mit einem Polygonnetz überzogen wird. Diesem Polygonnetz wird an jeder Stelle ein Wert für die Tiefenabmessung der Oberflächenstruktur zugeordnet. Der Wert kann als eine Anzahl von Graustufen ausgedrückt werden, welche einem oder mehreren Bildpunkten der Urtexturbitmap zugeordnet sind. In der Folge werden Graustufen stellvertretend als Beispiel für diese Zuordnung von Werten verwendet. Somit bildet mindestens je eine Graustufe eine Urtexturbitmap aus, wobei die Urtexturbitmap einem Polygon des Polygonnetzes des Urmodells zugeordnet ist. Die Summe der Urtexturbitmaps ergibt die Oberfläche des Urmodells. Jedes der Polygone des Urmodells kann gerade so groß gewählt werden, dass dessen Urtexturbitmap in einen Bearbeitungsbereich passt. Ein Bearbeitungsbereich wird durch die Arbeitsweise des Abtragmittels bestimmt. Ist das Abtragmittel ein Laser, liegt der Bearbeitungsbereich im Inneren des Fokus-Quaders. Ein Fokus-Quader entsteht, wenn man die Laserstrahlen bei Einsatz einer Planfeldlinse bei einer bestimmten Position des Scanners derart auf die Oberfläche des Körpers beliebiger Topologie richtet, dass ein punktgenauer Materialabtrag ermöglicht wird. Der Abstand zwischen Scanner und der Mittelebene des Quaders ist durch die Brennweite der Laseroptik gegeben. Die Höhe des Bearbeitungsbereichs, bei vorgegebenem maximalen Fehler der abgetragenen Schichtdicke, ist durch die maximale Fokustiefe (= Abweichung von der Brennweite) gegeben und seine Seitenlänge durch die entsprechende maximale Auslenkung der Galvanospiegel im Scanner. Innerhalb des Fokus-Quaders kann der Bearbeitungsbereich durch ein Polygon angenähert werden, dessen Ecken alle auf einer Fläche liegen, die idealerweise exakt den Abstand der Brennweite zu der Laseroptik hat und senkrecht zur Richtung des Laserstrahles in der Mittelstellung der Ablenkspiegel steht.

Das Polygon im Bearbeitungsbereich enthält eine Graustufenbitmap, welche durch Parallelprojektion der Urtexturbitmap auf das Polygon des Bearbeitungsbereichs erhalten wird. Die Summe der Polygone der Bearbeitungsbereiche ergibt wiederum die Oberfläche. Die Graustufenbitmap enthält alle Informationen über den in diesem Bearbeitungsbereich vorzunehmenden Materialabtrag. Jedem Bearbeitungsbereich ist eine Graustufenbitmap durch Parallelprojektion zugeordnet, somit enthalten alle Graustufenbitmaps die Informationen über die Oberflächenstruktur, die durch Materialabtrag erhalten werden soll. Die Oberflächenstruktur jeder Teilfläche wird somit durch ein Rasterbild, in diesem Beispiel der oben erwähnten Graustufenbitmap, welches aus Bildpunkten besteht, beschrieben, wobei die jeweils zu bearbeitende Teilfläche der Oberfläche vollkommen in den Fokusbereich des Lasers zu liegen kommt. Die Punktlage der Bildpunkte auf den Polygonen im dreidimensionalen Raum entspricht einer zweidimensionalen Koordinatenlage auf der Fläche der Rasterbilder, also der Graustufenbitmaps.

Die Polygonnetze jeder Schnittfläche sind versetzt zueinander angeordnet, sodass gleichartige Polygone nie mit ihren Kanten übereinander zu liegen kommen. Dabei kann sowohl die Position, der Winkel als auch die Größe der Polygone von Schicht zu Schicht verschieden sein.

Der Materialabtrag erfolgt im Bearbeitungsbereich derart, dass durch das Abtragmittel so oft ein Materialabtrag an einem bestimmten Punkt erfolgt, bis der Wert der Graustufe erreicht ist. Dazu fährt das Abtragmittel den Bearbeitungsbereich ab, nimmt in den Punkten einen Materialabtrag vor, in denen der Wert der Graustufe noch nicht erreicht ist, und schreitet zum nächsten Bearbeitungsbereich fort, bis alle Bearbeitungsbereiche vom Abtragmittel angefahren worden sind, womit der Materialabtrag der ersten Schicht beendet ist. Für die nächstfolgende Schicht erfolgt der Abtrag nach demselben Ablauf. Material wird nur abgetragen, wo der Wert der Graustufe noch nicht erreicht ist, in den restlichen Punkten erfolgt kein Materialabtrag.

Damit eröffnet sich die Möglichkeit, beliebig geformte Oberflächen, die beispielsweise als Werkzeuge oder Modelle ausgebildet sind, mit einer dreidimensionalen Oberflächenstruktur zu versehen, die einer natürlichen Oberflächenstruktur möglichst nahe kommt. Eine derartige Oberflächenstruktur ist beispielsweise die Narbe des Leders, die dadurch gekennzeichnet ist, dass Narbgipfel unterschiedliche Höhen und Ausdehnungen aufweisen und der Übergang zwischen Narbgipfeln und Narbtälern gleichmäßig verläuft. Diese Oberflächenstruktur kann mit Hilfe der Schnittflächen und der darauf angeordneten Graustufen abgebildet werden, sodass sie in eine maschinenlesbare Form übergeführt wird. Diese Information kann dann von einem Datenverarbeitungsprogramm in Steueranweisungen für eine Abtragvorrichtung umgewandelt werden. Als Abtragvorrichtung eignet sich insbesondere eine Laservorrichtung, mittels derer die gewünschte Genauigkeit im Mikrometerbereich erreichbar ist.

Es ist eine weitere Aufgabe der Erfindung, sichtbare Trenn- oder Grenzlinien beim Materialabtrag zu vermeiden, wobei diese Trennlinien als Grate oder Nuten im Randbereich eines Bearbeitungsbereichs ausgebildet sind.

Eine weitere Aufgabe ist die Realisierung beliebiger Varianten in der Oberflächenstruktur allein durch Programmierung des Abtragmittels. Die gewünschte Oberfläche, die Ergebnis einer Simulation, einer Bearbeitung eines Urmodells mittels eines Graphikprogramms oder eines 3d Scans sein kann, wird direkt in eine Ansteuerung des Abtragmittels zum zeilenweisen Abtrag der Oberfläche zur Erzeugung der Oberflächenstruktur übersetzt.

Diese weiteren Aufgaben werden durch folgendes Verfahren zur ein- oder mehrschichtigen Materialabtragung einer beliebig geformten dreidimensionalen Oberfläche mittels eines punktförmig auf eine Oberfläche wirkenden Abtragmittels, wie eines Lasers, verwirklicht, bei welchem eine Oberflächenstruktur auf der dreidimensionalen Oberfläche erzeugt wird, wobei die Oberfläche durch eine mathematische Funktion beschreibbar ist und demzufolge durch ein Polygonnetz angenähert werden kann. Die Oberflächenstruktur soll in der Folge auch als Textur bezeichnet werden. Das Verfahren zur Erzeugung einer Textur auf einer beliebig gekrümmten Oberfläche, wobei die Oberfläche als mathematische Funktion dargestellt ist, umfasst die Zerlegung der Oberfläche in eine Vielzahl von Teilflächen. Die Teilflächen beschreiben einen Ausschnitt der Textur durch eine Anzahl von Bildpunkten, denen eine Graustufe zugeordnet ist. Jede Teilfläche weist somit eine Verteilung von Graustufen auf. Jeder Graustufe wird ein Abstandswert zugeordnet, der dem kürzesten Abstand der Tangentialebene in diesem Bildpunkt zu dem Punkt auf der Texturoberfläche entspricht. Die Materialabtragung kann in mehreren Schichten erfolgen, wobei jeder Schicht ein eigenes Polygonnetz zugeordnet ist. Durch den Abstandswert wird die Anzahl der Schichten festgelegt, in welchen ein Materialabtrag erfolgen soll. Dieser Abstandswert kann ein Vielfaches der Schichtdicke betragen. Die Schichten können durch dieselbe mathematische Funktion beschrieben werden, wie die gekrümmte Oberfläche. Jede Schicht ist aus Teilflächen aufgebaut, wobei es sich bei den Teilflächen um Polygone handelt, auf welchen ein Bildpunkt angegeben ist, wenn der Abstandswert größer als die Summe der Schichtdicken der Schichten ist, welche zwischen der gekrümmten Oberfläche und der jeweiligen Schicht liegen. Die jeweils zu bearbeitende Teilfläche jeder Schicht hat in einer vorteilhaften Ausgestaltung keinen Randabschnitt mit einem der vorher bearbeiteten Teilflächen gemeinsam. Die Teilflächen benachbarter Schichten weisen somit keine gemeinsame Kante auf. Kanten der Teilflächen benachbarter Schichten sollen nicht übereinander zu liegen kommen, da es am Rand der Schicht zu einem Fehler in der Abtragung kommt. Dieser Fehler kann in der Ausbildung eines Grates oder eines Lochs bestehen. Die Teilflächen benachbarter Schichten sind zueinander versetzt angeordnet, gegeneinander gedreht oder auch zufällig angeordnet. Alternativ dazu oder zusätzlich können auch die Teilflächen benachbarter Schichten unterschiedliche Größe aufweisen. Jeder Schicht ist ein eigenes Polygonnetz zugeordnet. Das jeweils zu bearbeitende Teilstück jeder Schicht hat keinen Randabschnitt mit einem der vorher bearbeiteten Teilstücke gemeinsam. In einer weiteren vorteilhaften Ausgestaltung werden für jede Teilfläche, beziehungsweise jedes Polygon eine unterschiedliche Winkelrichtung der Laserspuren vorgegeben. Die Laserspuren treffen schräg auf die Teilfläche auf, wodurch weitere Randeffekte vermieden werden.

Das Polygonnetz wird in ein Steuerungsprogramm eines Abtragmittels eingelesen, wobei das Steuerungsprogramm Bearbeitungsbereiche festlegt. Ein derartiger Bearbeitungsbereich umfasst mindestens eine Teilfläche. Der Bearbeitungsbereich liegt im Inneren eines Fokusbereichs einer Abtragvorrichtung, wobei der Bearbeitungsbereich zeilenweise von einer Abtragvorrichtung abgefahren wird. Die Abtragvorrichtung wird eingeschaltet, wenn ein Bildpunkt in der im Bearbeitungsbereich liegenden Schicht zu liegen kommt. Die Abtragvorrichtung wird nicht eingeschaltet, wenn kein Bildpunkt der Schicht erkannt wird, was genau dann der Fall ist, wenn die dem Bildpunkt zugeordnete Graustufe einen Wert aufweist, bei welchem kein Abtrag mehr vorgenommen werden soll. Ist dieser Wert ein Helligkeitswert, und ist der maximale Abtrag an den dunkelsten Wert (schwarz) gekoppelt, wird bei Erreichen des Helligkeitswertes des Bildpunktes der Abtrag eingestellt. Je heller der Bildpunkt, desto weniger Schichten werden abgetragen. Ist der maximale Abtrag hingegen an den hellsten Wert gekoppelt, wird Material in umso mehr Schichten abgetragen, je heller der zugehörige Bildpunkt ist. Anstatt mit Helligkeitswerten kann auch mit Farbintensitäten, Spektralbereichen, Wellenlängen oder vergleichbarer Gradmesser gearbeitet werden, insoweit sie sich für eine graphische Darstellung der Oberflächenstruktur in einem Modell eignen oder sich von einer graphischen Darstellung in diesem Modell mittels eindeutiger Vorschriften für mehrschichtigen Materialabtrag transformieren lassen.

Das Verfahren findet für alle Materialien Verwendung, die geeignet sind, vom gewählten Abtragmittel abgetragen zu werden. Im Vergleich zu jedem der bekannten und sich im Einsatz befindenden Ätzverfahren oder galvanischen Verfahren bietet das Verfahren die Möglichkeit, innerhalb kürzerer Zeit eine genarbte Oberfläche hoher Qualität zu erhalten, wobei es wenig Einschränkungen in Bezug auf die Geometrie der Oberflächenstruktur zu beachten gilt und in der Materialauswahl nur darauf geachtet werden muss, dass das Abtragmittel geeignet ist, den Materialabtrag in der gewünschten Genauigkeit vorzunehmen.

Fig. 1 ist eine Darstellung einer gekrümmten Oberfläche

Fig. 2a ist eine Darstellung einer Textur als Schichtbild

Fig. 2b ist die Darstellung der Umwandlung der Textur in ein Rasterbild

Fig. 2c ist ein Schnitt durch eine Textur

Fig. 2d ist die Darstellung der Teilflächen mit den Rasterbildern

Fig. 3 ist eine Darstellung der Schichten mit den Teilflächen und ihren Rasterbildern

Fig. 4 ist eine schematische Darstellung des Verfahrens

Fig. 5 ist eine Darstellung des Abtrags einer Oberfläche in mehreren Schichten

Fig. 6 ist die Darstellung des Abtrags gekrümmter Oberflächen

Fig. 7 ist ein Detail aus Fig. 6 in dreidimensionaler Darstellung

Fig. 8 zeigt eine erste Anordnung von zwei benachbarten Schichten

Fig. 9 zeigt eine zweite Anordnung von zwei benachbarten Schichten

Fig. 10 zeigt eine dritte Anordnung von zwei benachbarten Schichten

Fig. 11 zeigt eine vierte Anordnung von zwei benachbarten Schichten

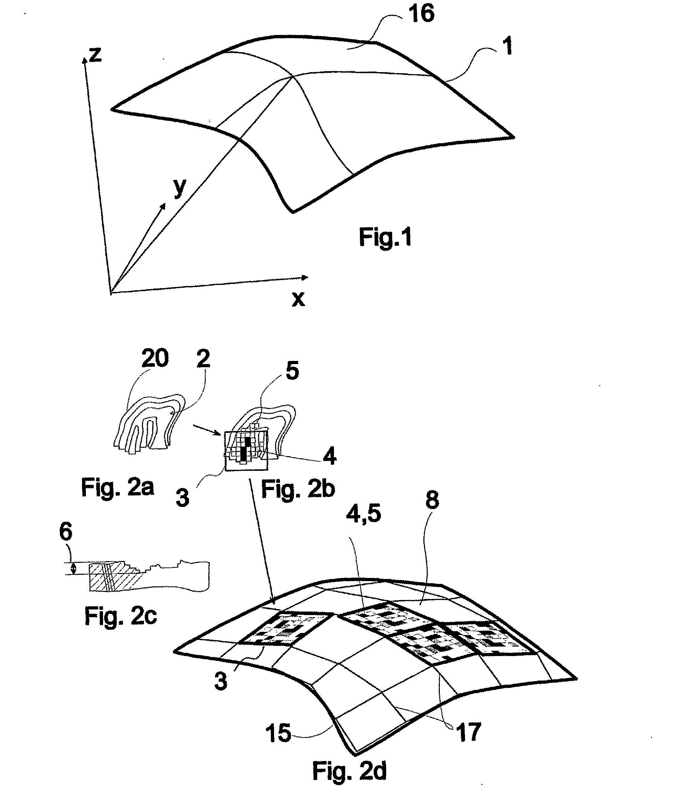

Fig. 1 ist die Darstellung einer gekrümmten Oberfläche 1, die durch eine mathematische Funktion beschrieben werden kann. Diese gekrümmte Oberfläche 1 soll mit einer Textur 2, also einer Oberflächenstruktur, versehen werden. Mit dieser Erfindung wird ein Verfahren für den schichtweise selektiven Formabtrag an einem Körper beliebiger Topologie 15 , das heißt also einem Körper mit der obengenannten Oberfläche 1, realisiert. Dabei soll eine Oberflächenstruktur 2 beispielsweise in der Form einer Narbe in den Körper beliebiger Topologie 15 eingebracht werden. Insbesondere soll die Oberflächenstruktur 2 möglichst gleichmäßig verlaufende Übergänge zwischen Narbgipfeln und Narbtälern aufweisen. Des weiteren sollen bezüglich der Topologie des Körpers keine Beschränkung auf z.B. Zylinderflächen oder auf ebene Oberflächen notwendig sein. Derartige beliebige Oberflächenstrukturen oder Narben müssen derart dargestellt werden können, dass sie mit einem bekannten Verfahren zur Abtragung von Material, insbesondere einem Laserverfahren, hergestellt werden können.

In Fig. 2a ist eine derartige Oberflächenstruktur 2 in einer zweidimensionalen Abbildung dargestellt. Die Tiefe der Textur wird durch die dargestellten Linien versinnbildlicht, die den Höhenlinien einer Landkarte entsprechen. Die Kontur 20 der Oberflächenstruktur 2 ist beliebig gewählt, ebenso wie der Verlauf der Höhenlinien. Diese Kontur 20 soll mittels eines Abtragmittels 9 erzeugt werden. Als Abtragmittel 9 kann ein Laserstrahl eingesetzt werden. Der Materialabtrag erfolgt dann durch das Verdampfen des Materials durch die mittels des Laserstrahles eingebrachte Wärmeenergie. Der Laserstrahl wird rechnergesteuert entlang des Bearbeitungsbereichs 10 gemäß der nachfolgend beschriebenen Abtragvorschrift über den Körper beliebiger Topologie 15 geführt. Bei großen Flächen erfolgt die Bearbeitung im allgemeinen abschnittsweise, das heißt in einem Abschnitt wird der Materialabtrag aller Schichten beendet, bevor mit dem nächsten Abschnitt begonnen wird.

In Fig. 2b ist dargestellt, wie die Textur 2 in ein Rasterbild umgewandelt wird. Hierbei muss man zwischen der Beschreibung der Topologie, d.h. der Geometrie des Körpers beliebiger Topologie 15 und der Narbe unterscheiden, das heißt, der gewünschten Feinstrukturierung der Oberfläche, welche auf dem Körper beliebiger Topologie - oder in allgemeiner Formulierung der gekrümmten Oberfläche - durch ein formgebendes Verfahren erzeugt wird. Dieses Rasterbild oder Urtexturbitmap 3 ist aus Bildpunkten 4 aufgebaut, wobei die Graustufe 5 ein Maß für den Abstandswert 6 der unbearbeiteten gekrümmten Oberfläche zu dem Grundbereich oder Boden der Oberflächenstruktur 2 darstellt. Anders ausgedrückt, umfasst das Verfahren zur Erzeugung einer Textur 2 auf einer beliebig gekrümmten Oberfläche 1 die Abtragung von Material in Schichten 7, wobei die Oberfläche 1 als mathematische Funktion darstellbar ist. Diese Oberfläche wird in eine Vielzahl von Teilflächen, also Polygonen eines Polygonnetzes 17, zerlegt, wie sie in Fig. 2d beispielhaft dargestellt sind. Den Teilflächen, also den Polygonen des Polygonnetzes 17 wird ein Rasterbild, die Urtexturbitmap 3 zugeordnet. Die Urtexturbitmap 3 beschreibt einen Ausschnitt der Textur 2 durch eine Anzahl von Bildpunkten 4, denen eine Graustufe 5 zugeordnet wird. Jede Teilfläche weist somit über eine Anzahl an Bildpunkten 4 eine Verteilung von Graustufen 5 auf, wobei jeder Graustufe 5 ein Abstandswert 6 zuordnet wird, der dem Normalabstand der Tangentialebene an die gekrümmte Oberfläche 1 in diesem Bildpunkt zu der Narboberfläche entspricht. Dieser Abstandswert 6 ist für den Abstand von der gekrümmten Oberfläche 1 bis zum tiefsten Punkt der Narbe 2 schematisch dargestellt.

In der Automobilindustrie werden zur Topologie-Beschreibung von sogenannten Freiformflächen, also gekrümmten Oberflächen, die durch eine mathematische Funktion beschrieben werden, im allgemeinen NURBS (non-uniform rational B-Splines) eingesetzt. Wenn man mit einer einzigen NURBS-Fläche eine komplexe Geometrie nicht zufriedenstellend beschreiben kann, werden mehrere sogenannte NURBS-Patches aneinandergesetzt. Oftmals werden diese vor dem Zusammensetzen auch noch beschnitten oder getrimmt, wozu auf den NURBS-Flächen liegende NURBS-Kurven eingesetzt werden.

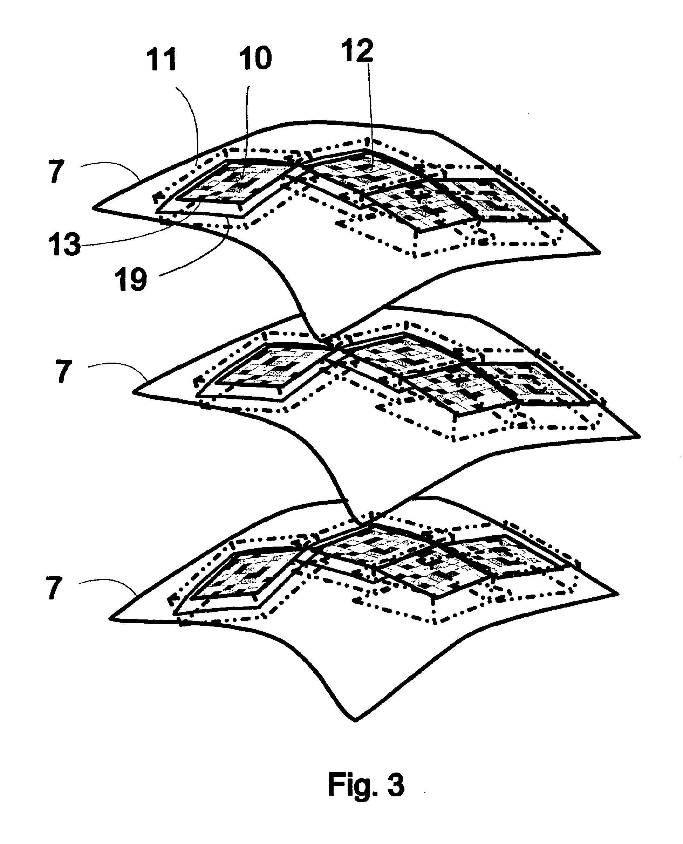

Um diese Topologie mit einem Abtragmittel 9, wie beispielsweise einem Laser, bearbeiten zu können, muss sie in Bearbeitungsbereiche 10 aufgeteilt werden. Diese Bearbeitungsbereiche 10 sind in Fig. 3 näher dargestellt. Die Größe des Bearbeitungsbereiches 10 wird Idealerweise so gewählt, dass er von dem Abtragmittel 9 zeilenweise abgefahren werden kann. Ist das Abtragmittel ein Laser, wird bei entsprechender Stellung des Scanners (möglichst näherungsweise senkrecht auf dem Bearbeitungsbereich 10) lediglich durch Einflussnahme auf die Galvanospiegel abgescannt. Des weiteren sollte die Entfernungsänderung zwischen Scanner und Teilfläche 19 gering gehalten werden. Ziel muss bei der Wahl der Größe des Bearbeitungsbereiches 10 in jedem Fall sein, dass weder durch die Winkelstellung des Abtragmittels, also beispielsweise des Lasers, noch durch die Veränderung des Abstandes zwischen der Teilfläche 19 und dem Scanner eine unerwünschte Änderung der Stärke des Materialabtrages erfolgt. Bei jedem Bearbeitungsbereich 10 ist zu beachten, dass er als ganzes im Fokusbereich 11 des Abtragmittels 9 zu liegen kommt.

Den möglichen Bearbeitungsbereich bei einer bestimmten Position des Scanners kann man bei Einsatz einer Planfeldlinse durch den Fokus-Quader 11 beschreiben. Der Abstand zwischen Scanner und der Mittelebene des Quaders ist durch die Brennweite der Laseroptik gegeben. Die Höhe des Bearbeitungsbereichs, bei vorgegebenem maximalen Fehler der abgetragenen Schichtdicke, ist durch die maximale Fokustiefe (= Abweichung von der Brennweite) gegeben und seine Seitenlänge durch die entsprechende maximale Auslenkung der Galvanospiegel im Scanner.

Innerhalb des Fokus-Quaders 11 kann der Bearbeitungsbereich 10 durch ein Polygon angenähert werden, dessen Ecken alle auf einer Fläche liegen, die idealerweise exakt den Abstand der Brennweite zu der Laseroptik hat und senkrecht zur Richtung des Laserstrahles in der Mittelstellung der Ablenkspiegel steht. Diesem Polygon entspricht nun eine Teilfläche 19 der zu bearbeitenden Schicht 7, wobei der Bearbeitungsbereich 10 durch Projektion des Polygons auf die NURBS-Fläche entsteht und vollkommen im Fokus-Quader 11 liegen muss.

Die gesamte Topologie der zu bearbeitenden Oberfläche 1 wird somit durch ein Gitternetz von zusammenhängenden Teilflächen 19 oder Polygonen verschiedener Größe und Form beschrieben. Dabei sind die Randbereiche 13, also die Polygonkanten unabhängig von den Rändern der die zu bearbeitende Teilfläche 19 beschreibenden NURBS-Patches zu wählen, d.h. es kann und wird vorkommen, dass ein oder mehrere Punkte des Polygons auf einem Patch liegen und ein oder mehrere Punkte des Polygons auf dem angrenzenden NURBS-Patch.

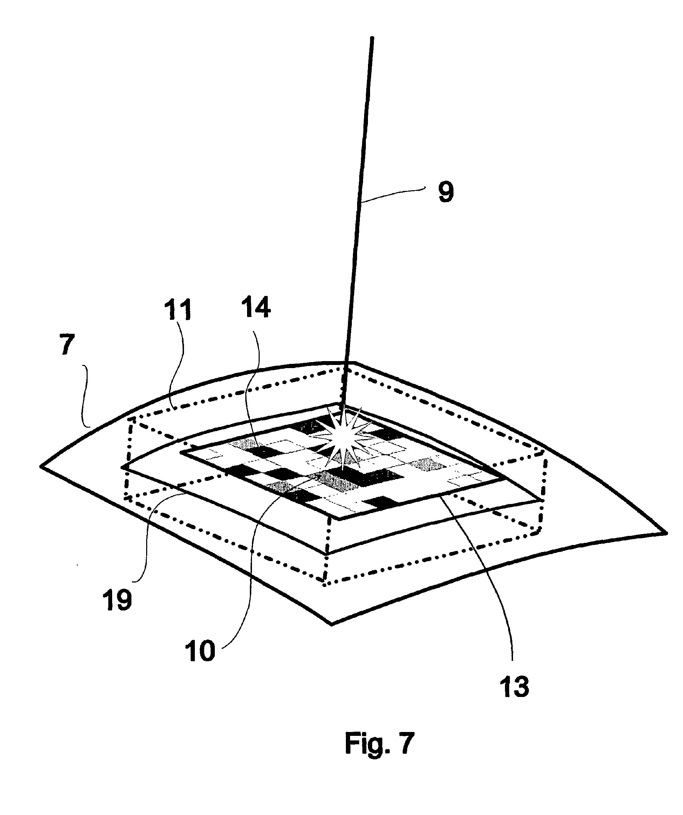

Für die Beschreibung der Feinstruktur der Oberfläche wird jedem Polygon zwecks der besseren Verarbeitbarkeit durch das Steuerprogramm des Lasers ein Rasterbild 14 (Bitmap) zugeordnet. Dieses Rasterbild 14 entspricht im wesentlichen der Teilfläche 19 und ist aus Bildpunkten verschiedener Graustufen 12 aufgebaut. In Fig. 7 wird dargestellt, dass das Rasterbild 14 nicht genau der Teilfläche 19 entspricht. Hierbei entspricht die Größe des Bildpunktes näherungsweise der Größe des Durchmessers des Laser-Lichtkegels und die Graustufe 12 (Helligkeit) des Bildpunktes der Tiefe der Oberflächenstruktur 2 an diesem Punkt. Ein weißer Punkt bedeutet in diesem Beispiel, dass überhaupt kein Material abgetragen wird, während ein schwarzer Punkt maximalen Materialabtrag bedeutet (oder umgekehrt).

Eine noch höhere Genauigkeit kann durch eine Beschreibung des Laserpunktes durch mehrere Bildpunkte in der Bitmap erreicht werden, wobei auf den unterschiedlichen Materialabtrag quer über den Durchmesser des Laserpunktes zurückgerechnet werden kann. Der Nachteil besteht in der Vergrößerung der Bitmap und der entsprechend höhere Speicherbedarf und der sich daraus ergebende Rechenaufwand in der Steuerelektronik.

Die Codierung der Bitmap entspricht hierbei der maximalen Zahl der Schichten 7, das heißt bei 256 Graustufen (= 8 bit) je Bildpunkt können maximal 256 Schichten dargestellt werden. Zur Abspeicherung dieses Rasterbildes sind verschiedene Computerformate mit entsprechenden Komprimierungsalgorithmen bekannt, die eine sehr starke Verringerung des Speicherbedarfes zur Folge haben.

Im allgemeinen Fall wird die Teilfläche 19, also das Polygon, selten eine quadratische Form haben. Daher erfolgt eine Zuordnung der Eckpunkte des Polygons im dreidimensionalen Raum zu jeweils einem entsprechenden Punkt auf der Bitmap 14 in 2D-Koordinaten (Texturkoordinaten).

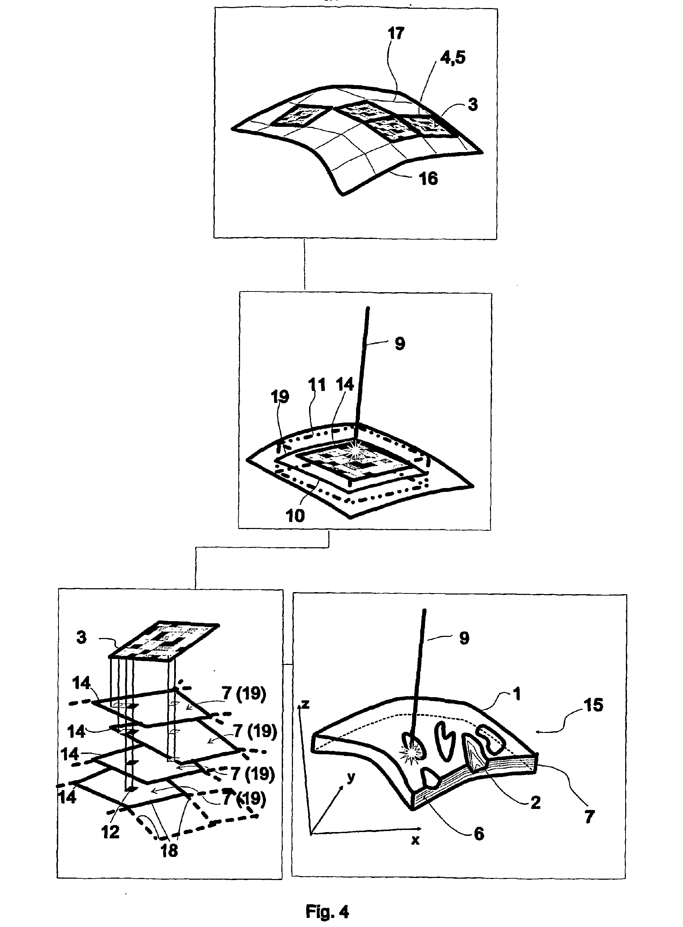

In Fig. 4 ist dargestellt, wie der Zusammenhang zwischen dem Rasterbild, welches die Bildpunkte 4 mit ihren Graustufen 5 enthält und den Schichten 7 ist, welche im wesentlichen der Kontur der gekrümmten Oberfläche folgen. Somit können die Schichten 7 mit im wesentlichen identischen mathematischen Funktionen beschrieben werden, wie die Oberfläche, oder mit einer Serie von mathematischen Funktionen, die sich als NURBS-Patches darstellen. Die unterschiedlichen Graustufen 5 werden als Vorschrift zum Abtragen von Material auf die einzelnen Schichten projiziert. Die Schicht selbst kann wiederum in Teilflächen 19 eingeteilt werden, wobei die Teilflächen so beschaffen sein sollten, dass die Genauigkeit der Abtragung durch das Abtragmittel 9 gewährleistet ist. Die Graustufe 12 entspricht der maximalen Tiefe des Abtrags. Dementsprechend wird beim Durchfahren jeder Schicht mit dem Abtragmittel 9 an der Stelle, welche der Graustufe 12 entspricht, ein Abtrag vorgenommen. Die Summe der Abträge je Schicht ergibt somit den gesamten Materialabtrag.

Der Ablauf des Verfahrens wird in Fig. 4 wie folgt schematisch dargestellt. Das Verfahren zur mehrschichtigen Materialabtragung von einem Körper beliebiger Topologie 15 mit einer beliebig geformten dreidimensionalen Oberfläche 1 erfolgt mittels eines punktförmig auf eine Oberfläche wirkenden Abtragmittels 9, wie eines Lasers, mittels welchem eine Oberflächenstruktur 2 auf der dreidimensionalen Oberfläche 1 erzeugt wird. Auf der Oberfläche 1 werden Bearbeitungsbereiche 10 definiert, wobei ein derartiger Bearbeitungsbereich 10 durch den Fokusbereich 11 des Abtragmittels bestimmt ist. Die Oberfläche 1 wird durch übereinander liegende Polygonnetze 18 angenähert, wobei jedes Polygon 19 des Polygonnetzes 18 dem Bearbeitungsbereich 10 des Abtragmittels 9 zugeordnet ist.

Die Oberflächenstruktur 2 wird durch mindestens eine Graustufenbitmap 14 beschrieben. Die Graustufenbitmap 14 umfasst Bildpunkte unterschiedlicher Graustufen 12 oder unterschiedlicher Farbstufen. Die jedem Bildpunkt der Graustufenbitmap 14 entsprechende Helligkeit der Graustufe 12 oder die Intensität der Farbstufe oder der Kennwert der Farbe, wie beispielsweise eine Wellenlänge bei Verwendung mehrfarbiger Bitmaps, bestimmt die Tiefe des Materialabtrags.

Der Materialabtrag erfolgt in der Anzahl Schichten 7, welche dem Wert der Graustufe 12 entsprechen. Jeder Schicht 7 ist ein eigenes Polygonnetz 18 zugeordnet. Das jeweils zu bearbeitende Polygon 19 jeder Schicht 7 hat keinen Randabschnitt mit einem der vorher bearbeiteten Polygone gemeinsam, womit sich Randeffekte vermeiden lassen, welche durch Ansetzen und Absetzen des Abtragmittels auf der Oberfläche sichtbar werden können.

Zur Durchführung des Verfahrens wird ein ursprüngliches dreidimensionales Computermodell 16 des Körpers beliebiger Topologie 15 erzeugt, welches durch ein ursprüngliches Polygonnetz 17 beschrieben wird. Den dreidimensionalen Ecken der Polygone des ursprünglichen Polygonnetzes 17 entsprechen zweidimensionale Punkte in einer oder mehrerer Ur-Texturbitmaps 3. Die Polygone werden in den zweidimensionalen Raum der Ur-Texturbitmaps 3 übertragen, wobei der Graustufenwert 5 eines Bildpunktes 4 der Ur-Texturbitmap 3 der erforderlichen Materialabtragung am Körper beliebiger Topologie 15 entspricht und die Bearbeitungsbereiche 10 einzelne Schichten 7 umfassen. Die Summe der Bearbeitungsbereiche 10 ergeben die Oberfläche 1 und die Summe der Schichten 7 ergibt die Oberflächenstruktur 2 des Körpers beliebiger Topologie 15. Jede Schicht 7 ist durch ein Polygonnetz 18 beschreibbar, wobei übereinander liegende Polygonnetze versetzt zueinander angeordnet sind. Die Oberflächenstruktur 2 des Körpers beliebiger Topologie 15 wird durch übereinander liegende, zueinander versetzt angeordnete, Polygonnetze 18 angenähert. Jedem Polygon 19 des Polygonnetzes 18 wird innerhalb des Bearbeitungsbereichs 10 eine Graustufenbitmap 14 aus einer Parallelprojektion der Ur-Texturbitmap 3 auf das Polygon 19 innerhalb des Bearbeitungsbereichs 10 zugeordnet, sodass der Materialabtrag durch das Abtragmittel 9 in jeder Schicht 7 entsprechend der Werte der Graustufenbitmaps 14 vorgenommen werden kann. Der Abstandswert 6 zwischen zwei Schichten 7 entspricht somit der Helligkeitsdifferenz zwischen zwei benachbarten Graustufen 12

Das Urmodell wird aus der Beschreibung des Körpers beliebiger Topologie durch CAD-(Spline)-Flächen abgeleitet, welche das ursprüngliche Polygonnetz 17 ergeben.

Die Helligkeitswerte der Graustufen 12 der Graustufenbitmaps 14 werden vor oder während der Bearbeitung der Oberfläche 1 des Körpers beliebiger Topologie 15 auf die Ur-Texturbitmap 3 zurückgerechnet. Anstelle von Helligkeitswerten von Graustufen 12 können auch Farbstufen oder Farben aus dem Farbspektrum verwendet werden.

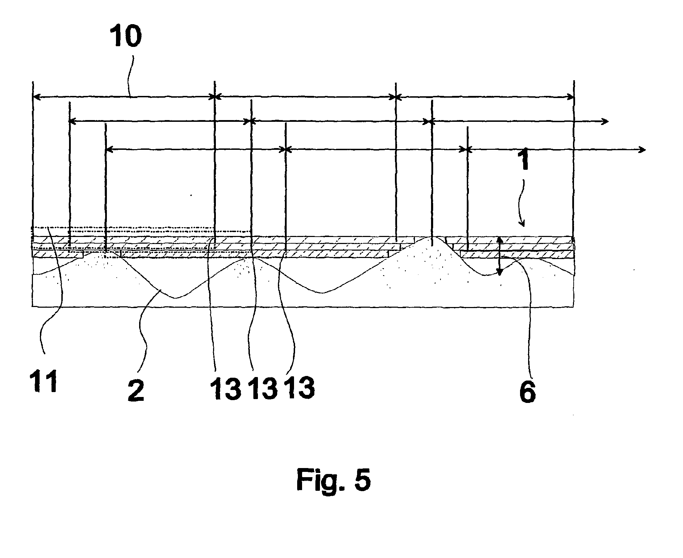

In Fig. 5 ist dargestellt, wie der Vorgang der Abtragung erfolgt, wenn ein im wesentlichen ebener Ausschnitt der Textur 2 vorliegt. Der Abtrag erfolgt von der Oberfläche 1 her in Schichten von einer im wesentlichen gleichbleibenden Schichtdicke. Zufriedenstellende Ergebnisse für die Abbildungstreue der Textur wurden bei Schichtdicken von 5 µm erreicht. Der für die Abtragung verwendete Nd:YAG Laser kann eine Schicht von 5 µm abtragen. Die Rasterbilder haben dabei Vorteilhafterweise eine Größe von mindestens 4 mal der Schichtdicke, da durch die Randabschnitte immer Unschärfebereiche vorliegen. Randbereiche beinhalten dabei nicht nur die Kanten der Polygone 19, sondern auch die Randbereiche 13 der Graustufe 12, bis zu welcher in der betreffenden Schicht maximal abgetragen wird. Deutlich wird in Fig. 5 ebenfalls, dass der Abtrag schichtweise erfolgt und dass der Abtrag so lange erfolgt, so lange die Kontur der Oberflächenstruktur 2 nicht erreicht ist. Der eingezeichnete Abstandswert 6 von der Oberfläche 1 bis zur Kontur ergibt genau die Graustufe 12, bis zu welcher abgetragen werden soll. Zudem ist gezeigt, dass jede Schicht 7 bezüglich der benachbarten Schichten mit Bearbeitungsbereichen 10 überzogen ist, die zueinander versetzt angeordnet sind. Die Bearbeitungsbereiche enthalten die Teilflächen 19. Auf die versetzte Anordnung soll später noch genauer eingegangen werden.

Es ist bei entsprechender Anordnung der Polygone 19 auch möglich, die Texturkoordinaten mehrerer Polygone auf einer Bitmap zusammenzufassen. Außerdem kann beim Errechnen und Abspeichern der Polygone und zugehörigen Bitmaps auch schon eine Winkelrichtung für die Laserspuren vorgegeben werden. Die Laserspuren brauchen den Rasterlinien der Bitmap nicht unbedingt zu folgen, sondern es können Verfahren der Computergrafik zum Einsatz kommen, die für eine schräg zu den Rasterlinien verlaufende Laserspur die Helligkeitswerte errechnen, unter Verwendung von Antialiasing-Algorithmen. (vgl: eine diagonal auf einem Computerbildschirm verlaufende Linie).

Bei der Bearbeitung des Körpers beliebiger Topologie muss ein Abtragmittel, also in diesem Beispiel ein Lasergerät zum Einsatz kommen, bei dem der Scanner, in dem sich die Galvanospiegel befinden, in Bezug auf den Körper beliebiger Topologie eine ausreichende Beweglichkeit aufweist, um eine Position anfahren zu können, die sich möglichst senkrecht relativ zu jedem Polygon im Abstand der Brennweite der Laseroptik befindet, d.h. die derjenigen Position entspricht, die bei der Berechnung der Polygone zugrunde gelegt wurde.

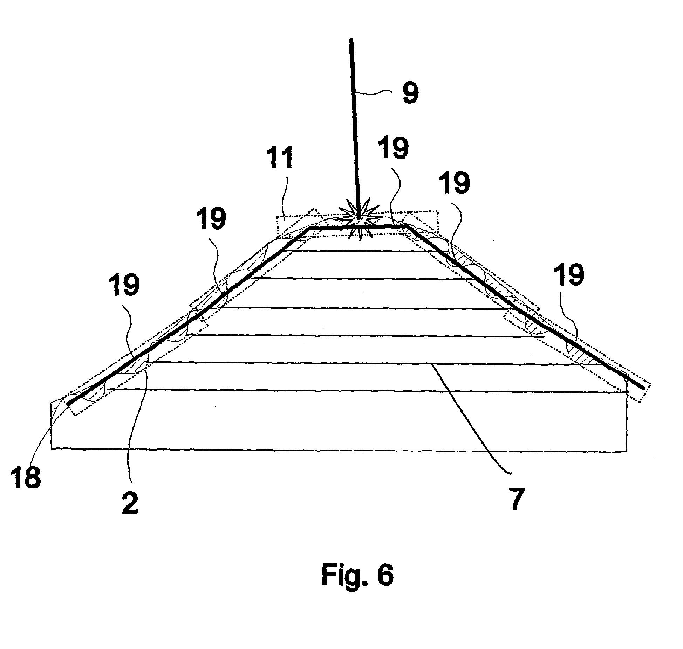

Für die Steuerung des Lasergerätes im Sinne einer wirtschaftlichen Bearbeitung ist es vonnöten, die Polygone im Datensatz so zu ordnen, dass sie von der Steuerelektronik in einer Reihenfolge eingelesen werden, die möglichst geringe Verfahrwege des Scanners zur Folge hat. In Fig. 6 ist ein Schnitt durch eine gekrümmte Oberfläche 1 dargestellt, bei welcher die Teilflächen 19 im wesentlichen parallel zur gekrümmten Oberfläche angeordnet sind. Es ist der Übersichtlichkeit wegen nur eine einzige Schicht 7 mit ihren Teilflächen 19 dargestellt. Das Abtragmittel 9 nimmt einen Abtrag entlang einer Teilfläche 19 vor, wobei der Abtrag nur in dem von der Kontur der Oberflächenstruktur 2 nicht erfassten Bereich erfolgt. Der Bearbeitungsbereich 10 kann dabei mit den Randbereichen 13 der Teilfläche 19 übereinstimmen. Ein Bearbeitungsbereich 10 kann aber auch aus mehreren Teilflächen 19 oder Polygonen zusammengesetzt sein.

Fig. 7 zeigt noch einmal im Detail, wie Abtrag auf der Teilfläche 19 erfolgt. Das Abtragmittel 9 fährt das Rasterbild, welches der Teilfläche 19 zugeordnet ist, ab, und nimmt an allen Orten, an welchen die Graustufe 12 größer oder gleich (kleiner oder gleich) dem Wert für die Graustufe der Schicht 7 ist, zu welcher die Teilfläche 19 gehört, einen Materialabtrag vor. Das Rasterbild 14 ist in diesem Fall kleiner als die Teilfläche 19, was zur Folge hat, dass sich angrenzende Bearbeitungsbereiche 10 mit dem Fokusbereich 11 überlappen. Diese Anordnung kann vorteilhaft sein, wenn die Krümmung der Oberfläche, welche durch die Teilfläche 19 gebildet wird, so groß ist, dass eine Veränderung des Schichtabtrags bedingt durch die Eigenschaften des Abtragmittels 9 erfolgt, was zu einem ungleichmäßigen Materialabtrag führen würde und als Fehler in der zu erzeugenden Oberflächenstruktur erkennbar wäre.

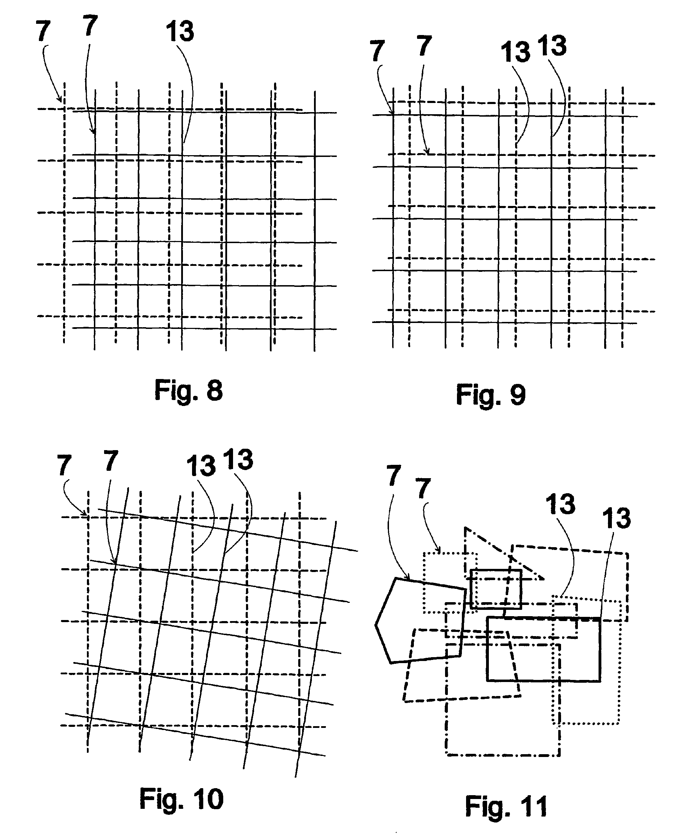

Möglichkeiten zur Vermeidung von Trennlinien, die in dem Bereich entstehen, in dem eine Laserspur endet und die nächste beginnt, werden in Fig. 8-11 dargestellt. Diese Trennlinien entstehen durch vermehrten oder verminderten Materialabtrag an den Kanten der Polygone. Sie entstehen dann, wenn Kanten von Bearbeitungsbereichen bzw. Polygonen einer Schicht aneinander stossen.

Die Schichtdicke kann nun so stark herabgesetzt werden, dass die entstehende Grenzlinie in der Höhe vernachlässigbar klein im Vergleich zu der Gesamthöhe der Narbe die durch den Abtrag mehrer Schichten entsteht und somit nicht mehr sichtbar ist.Die Addition des Trennlinien-Fehlers an den Polygonkanten 13 wird dadurch vermieden, dass jeder abzutragenden Schicht 7 ein eigenes unabhängiges 3-dimensionales Polygonnetz 18 zugeordnet wird, wie es auch in Fig. 4 dargestellt ist. Dieses kann völlig frei gewählt werden, unter Beachtung der obengenannten Vorgaben. Dabei muss beachtet werden, dass sich Polygonränder 13 zwar überschneiden (das ist unvermeidlich), aber keinesfalls übereinander liegen dürfen. Ansonsten addiert sich der Trennlinien-Fehler der verschiedenen Schichten. Das bedeutet, bei Betrachtung eines beliebigen Punktes auf der zu bearbeitenden Fläche des Körper beliebiger Topologie es und einem Materialabtrag in n Schichten, dass dieser Punkt zu n verschiedenen Polygonen 19 aus n verschiedenen Polygonnetzen 18 "gehört". Verschiedene Möglichkeiten der Anordnung benachbarter Schichten werden in den Fig. 8-11 dargestellt, wobei die Teilflächen 19 Polygone sind. Die Teilflächen 19 einer Schicht 7 grenzen mittels gemeinsamer Randabschnitte 13 aneinander. Die Randabschnitte 13 der Teilflächen 19 benachbarter Schichten 7 kommen aber nicht übereinander zu liegen. Nach Fig. 8 weisen die Teilflächen 19 benachbarter Schichten 7 unterschiedliche Größe auf.

Nach Fig. 9 sind die Teilflächen 19 benachbarter Schichten 7 zueinander versetzt angeordnet.

Nach Fig. 10 sind die Teilflächen 19 benachbarter Schichten 7 gegeneinander gedreht. Nach Fig. 11 sind die Teilflächen 19 benachbarter Schichten 7 zufällig angeordnet. In diesem Fall wird auf ein Polygonnetz ganz verzichtet, und zur Vermeidung von sichtbaren Trennkanten nur die Eigenschaft ausgenutzt, dass sich die Kanten der einzelnen Polygone nicht überlagern dürfen.

Diese Polygone können sich entweder eine Textur-Bitmap teilen, oder aber sie verteilen sich auf mehr als eine bis maximal n Bitmaps.

Bezüglich der zugehörigen Textur-Bitmaps muss beachtet werden, dass beim Vorhandensein von mehreren Bitmaps sich der entsprechende Schichtabtrag auf die einzelnen Bitmaps verteilt. Das heißt, der endgültige Materialabtrag an einem bestimmten Punkt ergibt sich aus einer Addition der einzelnen Grauwerte der Texturbitmaps an diesem Punkt. Die oben erwähnte Fig. 4 zeigt diese Möglichkeit im Detail.

Ist der Trennlinienfehler noch stärker zu reduzieren, kann ein zur Anwendung kommen, bei dem ein Überlappungsbereich zwischen den Bearbeitungsbereichen gebildet wird, in dem die Bearbeitungsspuren des Lasers in den Anschnitten ineinander greifen, und die Übergangspunkte statistisch verteilt sind.

## Patentansprüche

1. Verfahren zur Erzeugung einer Textur (2) auf einer beliebig gekrümmten Oberfläche (1) durch Abtragung von Material in Schichten (7) mittels eines Abtragmittels, wie z.B. eines Lasers, wobei die Oberfläche (1) durch mindestens ein Polygonnetz beschrieben wird, und dieses Polygonnetz in eine Vielzahl von Teilflächen, z.B. Polygonen (3) zerlegbar ist, welche die beliebig gekrümmte Oberfläche zumindest näherungsweise als mathematische Funktion beschrieben wird, wobei die Teilflächen (3) einen Ausschnitt der Textur (2) durch eine Anzahl von Bildpunkten (4), denen eine Graustufe (5) zugeordnet wird, beschreiben und jede Teilfläche (3) somit über eine Anzahl an Bildpunkten (4) eine Verteilung von Graustufen (5) aufweist, wobei daß jeder Graustufe (5) ein Abstandswert (6) zugeordnet wird, der dem Abstand der gekrümmten Oberfläche (1) in diesem Bildpunkt zu der Texturoberfläche entspricht, wobei diese mathematische Oberfläche direkt in einer Ansteuerung des Abtragsmittels (9) zum zeilenweisen Abtrag der Oberfläche zur Erzeugung der Oberflächenstruktur übersetzt wird.

2. Verfahren nach Anspruch 1,
**gekennzeichnet dadurch, dass** durch den Abstandswert (6) die Anzahl der Schichten (7) festgelegt wird, in welchen Material abgetragen wird.

3. Verfahren nach Ansprüchen 1 oder 2,
**gekennzeichnet dadurch, dass** der Abstandswert (6) ein Vielfaches einer Schichtdicke betragen kann.

4. Verfahren nach Anspruch 2,
**gekennzeichnet dadurch, dass** jede der Schichten (7) durch ein eigenes Polygonnetz beschrieben werden kann.

5. Verfahren nach Anspruch 2,
**gekennzeichnet dadurch, dass** jede Schicht (7) aus Teilflächen (19) aufgebaut ist.

6. Verfahren nach Anspruch 2,
**gekennzeichnet dadurch, dass** die Teilflächen (19) Polygone sind.

7. Verfahren nach Anspruch 5,
**gekennzeichnet dadurch, dass** die Teilflächen (19) einer Schicht (7) mittels gemeinsamer Randbereiche (13) aneinander grenzen.

8. Verfahren nach Anspruch 7,
**gekennzeichnet dadurch dass** Randbereiche (13) der Teilflächen (19) benachbarter Schichten (7) nicht übereinander zu liegen kommen.

9. Verfahren nach Anspruch 8,
**gekennzeichnet dadurch, dass** die Teilflächen (19) benachbarter Schichten (7) zueinander versetzt angeordnet sind.

10. Verfahren nach Anspruch 8,
**gekennzeichnet dadurch, dass** die Teilflächen (19) benachbarter Schichten (7) gegeneinander gedreht sind.

11. Verfahren nach Anspruch 8,
**gekennzeichnet dadurch, dass** die Teilflächen (19) benachbarter Schichten (7) zufällig angeordnet sind.

12. Verfahren nach Anspruch 8,
**gekennzeichnet dadurch, dass** die Teilflächen (19) benachbarter Schichten (7) unterschiedliche Größe aufweisen.

13. Verfahren nach Anspruch 1,
**gekennzeichnet dadurch, dass** das aus Teilflächen (19) aufgebaute Polygonnetz in ein Steuerungsprogramm eines Abtragmittels (9) eingelesen wird.

14. Verfahren nach Anspruch 13,
**gekennzeichnet dadurch, dass** das Steuerungsprogramm Bearbeitungsbereiche (10) festlegt.

15. Verfahren nach Anspruch 14,
**gekennzeichnet dadurch, dass** ein Bearbeitungsbereich (10) mindestens eine Teilfläche (19) umfasst.

16. Verfahren nach Anspruch 14,
**gekennzeichnet dadurch, dass** der Bearbeitungsbereich (10) im Inneren eines Fokusbereichs (11) des Abtragmittels (12) liegt.

17. Verfahren nach Anspruch 14,
**gekennzeichnet dadurch, dass** der Bearbeitungsbereich (10) zeilenweise von dem Abtragmittel (9) angefahren wird.

18. Verfahren nach Anspruch 17,
**gekennzeichnet dadurch, dass** das Abtragmittel (9) eingeschaltet wird, wenn ein Bildpunkt mit einer Graustufe (12) in der im Bearbeitungsbereich (10) liegenden Schicht (7) zu liegen kommt.

19. Verfahren nach Anspruch 17,
**gekennzeichnet dadurch, dass** das Abtragmittel nicht eingeschaltet wird, wenn kein Bildpunkt mit einer Graustufe (12) der Schicht (7) erkannt wird.

20. Verfahren nach Ansprüchen 1, 2 oder 15,
**gekennzeichnet dadurch, dass** für jede Teilfläche (19) eine unterschiedliche Winkelrichtung für das Abtragmittel (9) vorgegeben wird.

21. Verfahren nach Anspruch 20,
**gekennzeichnet dadurch, dass** das Abtragmittel (9) schräg auf die Teilfläche (19) auftrifft.

22. Vorrichtung zur schichtweisen Abtragung von Material von einem Körper beliebiger Topologie (15) zur Erzeugung einer dreidimensionalen Struktur (2) auf dem Körper beliebiger Topologie, mit einem punktförmig auf die Oberfläche wirkenden Abtragsmittel (9), wie z.B. einem Laser und einem Rechner, durch den das Abtragsmittel (9) angesteuert wird, indem die Topologie der Oberfläche des Körpers durch ein Polygonnetz (17) dargestellt wird, mittels welchem die Topologie zumindest näherungsweise als mathematische Funktion beschrieben wird, indem das Polygonnetz (17) mit den darauf enthaltenen Informationen über den Materialabtrag auf das Polygonnetz (18) projiziert wird, wobei dem Abtragmittel (9) in jedem Polygon (19) des Polygonnetzes (18) ein Bearbeitungsbereich zugeordnet sein kann, wobei der Bearbeitungsbereich (10) durch zumindest ein Rasterbild (14) beschrieben wird, sodass das Abtragmittel (9) gemäss den in dem Rasterbild (14) gespeicherten Informationen einen Materialabtrag im Bearbeitungsbereich (10) vornimmt, wobei der Ablauf für jedes Polygon (19) des Polygonnetzes (18) wiederholt wird.

23. Vorrichtung nach Anspruch 22,
**gekennzeichnet dadurch, dass** das Rasterbild (14) mittels einer Scanvorrichtung erzeugt wurde und Informationen über die punktweise Abtragung von Material enthält.

24. Vorrichtung nach Anspruch 22,
**gekennzeichnet dadurch, dass** der Bearbeitungsbereich (10) vollkommen im Fokusbereich (11) des Abtragmittels (9) liegt.

## Claims

1. A method for producing a texture (2) on an arbitrarily curved surface (1) by the removal of material in layers (7) by means of a removal agent, such as, for example, a laser, whereby the surface (1) is described by at least one polygon network, and this polygon network can be broken down into a plurality of sub-areas, e.g. polygons (3), which describes the randomly curved surface at least approximately as a mathematical function, whereby the sub-areas (3) describe a section of the texture (2) by a number of pixels (4) to which a grey scale value (5) is assigned, and each sub-area (3) thus over a number of pixels (4) has a distribution of grey scale values (5), whereby a distance value (6) corresponding to the distance of the curved surface (1) in this pixel to the texture surface is assigned to each grey scale value (5), whereby this mathematical surface is translated directly in a actuation of the removal agent (9) for the line-by-line removal of the surface to produce the surface structure.

2. A method according to Claim 1,
**characterised in that** the number of layers (7) in which material is removed is determined by the distance value (6).

3. A method according to Claims 1 or 2,
**characterized in that** the distance value (6) may be a multiple of a layer thickness.

4. A method according to Claim 2,
**characterised in that** each of the layers (7) can be described by its own polygon network.

5. A method according to Claim 2,
**characterised in that** each layer (7) is constructed from sub-areas (19).

6. A method according to Claim 2,
**characterised in that** the sub-areas (19) are polygons.

7. A method according to Claim 5,
**characterised in that** the sub-areas (19) of a layer (7) adjoin by means of common edge areas (13).

8. A method according to Claim 7,
**characterised in that** edge areas (13) of the sub-areas (19) of adjacent layers (7) do not come to overlap.

9. A method according to Claim 8,
**characterised in that** the sub-areas (19) of adjacent layers (7) are disposed so that they are mutually offset.

10. A method according to Claim 8,
**characterised in that** the sub-areas (19) of adjacent layers are rotated in relation to each other.

11. A method according to Claim 8,
**characterised in that** the sub-areas (19) of adjacent layers (7) are disposed randomly.

12. A method according to Claim 8,
**characterised in that** the sub-areas (19) of adjacent layers (7) are different sizes.

13. A method according to Claim 1,
**characterised in that** the polygon network constructed from sub-areas (19) is read into a control programme for a removal agent (9).

14. A method according to Claim 13,
**characterised in that** the control programme identifies machining areas (10).

15. A method according to Claim 14,
**characterised in that** a machining area (10) comprises at least one sub-area (19).

16. A method according to Claim 14,
**characterised in that** the machining area (10) lies inside a focal area (11) of the removal agent (12).

17. A method according to Claim 14,
**characterised in that** the machining area (10) is approached line-by-line by the removal agent (9).

18. A method according to Claim 17,
**characterised in that** the removal agent (9) is switched on when a pixel with a grey scale value (12) comes to lie in the layer (7) located in the machining area (10).

19. A method according to Claim 17,
**characterised in that** the removal agent is not switched on if no pixel with a grey scale value (12) of the layer (7) is detected.

20. A method according to Claims 1, 2 or 15,
**characterised in that** a different angle direction for the removal agent (9) is specified for each sub-area (19).

21. A method according to Claim 20,
**characterised in that** the removal agent (9) strikes the sub-area (19) obliquely.

22. A device for the layer-by-layer removal of material from a body of any topology (15) for the production of a three-dimensional structure (2) on the body of any topology, with a removal agent (9) acting in punctiform manner on the surface, such as, for example, a laser and a computer, by which the removal agent (9) is controlled, by the topology of the surface of the body being represented by a polygon network (17) by means of which the topology is described at least approximately as a mathematical function by the polygon network (17) with the information contained thereon on the removal of material being projected onto the polygon network (18), whereby a machining area can be associated with the removal agent (9) in each polygon (19) of the polygon network (18), whereby the machining area (10) is described by at least one raster image (14), so that the removal agent (9) performs the removal of material in the machining area (10) according to the information stored in the raster image (14), the procedure being repeated for each polygon (19) of the polygon network (18).

23. A device according to Claim 22,
**characterised in that** the raster image (14) was produced by means of a scanning device and contains information on the point-by-point removal of material.

24. A device according to Claim 22,
**characterised in that** the machining area (10) lies completely inside the focal area (11) of the removal agent (9).

## Revendications

1. Procédé pour réaliser une texture (2) sur une surface (1) courbée de façon quelconque par enlèvement de matière par couches (7) à l'aide d'un moyen d'enlèvement tel que par exemple un laser, selon lequel
- la surface (1) est décrite par au moins un réseau de polygones et ce réseau de polygones peut être divisé en une multitude de surfaces partielles, par exemple en polygones (3) qui décrivent la surface courbée de façon quelconque au moins approximativement comme une fonction mathématique,
- les surfaces partielles (3) décrivent un détail de la texture (2) par un nombre de pixels (4) auxquels est associé un niveau de gris (5) et chaque surface partielle (3) présente ainsi une répartition de niveaux de gris (5) sur un nombre de pixels (4),
- une valeur de distance (6) qui correspond à la distance de la surface courbée (1) dans ce pixel par rapport à la surface de la texture est associée à chaque niveau de gris (5), et
- cette surface mathématique est directement traduite dans une commande du moyen d'enlèvement (9) pour l'enlèvement pas lignes de la surface pour réaliser la structure superficielle.

2. Procédé selon la revendication 1,
**caractérisé en ce que**
la valeur de distance (6) définit le nombre de couches (7) dans lesquelles on enlève de la matière.

3. Procédé selon les revendications 1 ou 2,
**caractérisé en ce que**
la valeur de distance (6) peut être un multiple d'une épaisseur de couche.

4. Procédé selon la revendication 2,
**caractérisé en ce que**
chacune des couches (7) peut être décrite par un réseau de polygones propre.

5. Procédé selon la revendication 2,
**caractérisé en ce que**
chaque couche (7) est construite à partir de surfaces partielles (19).

6. Procédé selon la revendication 2,
**caractérisé en ce que**
les surfaces partielles (19) sont des polygones.

7. Procédé selon la revendication 5,
**caractérisé en ce que**
les surfaces partielles (19) d'une couche (7) sont adjacentes au moyen de zones périphériques (13) communes.

8. Procédé selon la revendication 7,
**caractérisé en ce que**
des zones périphériques (13) des surfaces partielles (19) de couches (7) voisines ne sont pas superposées.

9. Procédé selon la revendication 9,
**caractérisé en ce que**
les surfaces partielles (19) de couches (7) voisines sont décalées les unes par rapport aux autres.

10. Procédé selon la revendication 8,
**caractérisé en ce que**
les surfaces partielles (19) de couches (7) voisines sont tournées les unes par rapport aux autres.

11. Procédé selon la revendication 8,
**caractérisé en ce que**
les surfaces partielles (19) de couches (7) voisines sont disposées de façon aléatoire.

12. Procédé selon la revendication 8,
**caractérisé en ce que**
les surfaces partielles (19) de couches (7) voisines présentent une grandeur différente.

13. Procédé selon la revendication 1,
**caractérisé en ce que**
le réseau de polygones construit à partir de surfaces partielles (19) est enregistré dans un programme de commande d'un moyen d'enlèvement (9).

14. Procédé selon la revendication 13,
**caractérisé en ce que**
le programme de commande définit des zones d'usinage (10).

15. Procédé selon la revendication 14,
**caractérisé en ce qu'**
une zone d'usinage (10) comprend au moins une surface partielle (19).

16. Procédé selon la revendication 14,
**caractérisé en ce que**
la zone d'usinage (10) se situe à l'intérieur d'une zone de focalisation (11) du moyen d'enlèvement (12).

17. Procédé selon la revendication 14,
**caractérisé en ce que**
la zone d'usinage (10) est balayée par lignes par le moyen d'enlèvement (9).

18. Procédé selon la revendication 17,
**caractérisé en ce que**
le moyen d'enlèvement (9) est activé si un pixel avec un niveau de gris (12) se trouve dans la couche (7) située dans la zone d'usinage (10).

19. Procédé selon la revendication 17,
**caractérisé en ce que**
le moyen d'enlèvement n'est pas activé si aucun pixel avec un niveau de gris (12) n'est détecté dans la couche (7).

20. Procédé selon les revendications 1, 2 ou 15,
**caractérisé en ce que**
pour chaque surface partielle (19) on indique une direction angulaire différente pour le moyen d'enlèvement (9).

21. Procédé selon la revendication 20,
**caractérisé en ce que**
le moyen d'enlèvement (9) touche la surface partielle (19) en biais.

22. Dispositif pour l'enlèvement par couches de matière d'un corps d'une topologie (15) quelconque pour réaliser une structure (2) tridimensionnelle sur le corps d'une topologie quelconque, comprenant un moyen d'enlèvement (9) agissant de façon ponctuelle sur la surface, tel que par exemple un laser et un calculateur qui commande le moyen d'enlèvement (9), en représentant la topologie de la surface du corps par un réseau de polygones (17) qui décrit la topologie au moins approximativement comme une fonction mathématique, en projetant le réseau de polygones (17) avec les informations concernant l'enlèvement de matière contenues sur celui-ci sur le réseau de polygones (18), sachant qu'une zone d'usinage peut être associée au moyen d'enlèvement (9) dans chaque polygone (19) du réseau de polygones (18), la zone d'usinage (10) est décrite par au moins une image matricielle (14), de sorte que le moyen d'enlèvement (9) effectue un enlèvement de matière dans la zone d'usinage (10 selon les informations stockées dans l'image matricielle (14), et le processus est répété pour chaque polygone (19) du réseau de polygones (18).

23. Dispositif selon la revendication 22,
**caractérisé en ce que**
l'image matricielle (14) a été générée au moyen d'un scanner et contient des informations concernant l'enlèvement ponctuel de matière.

24. Dispositif selon la revendication 22,
**caractérisé en ce que**
la zone d'usinage (10) se situe entièrement dans la zone de focalisation (11) du moyen d'enlèvement (9).
